(19) Europäisches Patentamt
European Patent Office
Office européen des brevets

(11) EP 4 195 348 A1

(12) **EUROPEAN PATENT APPLICATION**
published in accordance with Art. 153(4) EPC

(43) Date of publication:
**14.06.2023 Bulletin 2023/24**

(21) Application number: **21939990.4**

(22) Date of filing: **25.10.2021**

(51) International Patent Classification (IPC):
***H01M 10/0525*** *(2010.01)* ***H01M 4/52*** *(2010.01)*

(86) International application number:
**PCT/CN2021/126107**

(87) International publication number:
**WO 2023/070268 (04.05.2023 Gazette 2023/18)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Contemporary Amperex Technology Co., Limited**
**Ningde City, Fujian 352100 (CN)**

(72) Inventors:
- **CHEN, Peipei**
  **Ningde City, Fujian 352100 (CN)**
- **ZHANG, Limei**
  **Ningde City, Fujian 352100 (CN)**
- **PENG, Chang**
  **Ningde City, Fujian 352100 (CN)**
- **ZOU, Hailin**
  **Ningde City, Fujian 352100 (CN)**

(74) Representative: **Behr, Wolfgang**
**Lorenz Seidler Gossel**
**Rechtsanwälte Patentanwälte**
**Partnerschaft mbB**
**Widenmayerstraße 23**
**80538 München (DE)**

# (54) ELECTROCHEMICAL DEVICE AND POWER CONSUMPTION APPARATUS COMPRISING SAME

(57) Provided in the present application are an electrochemical device and a power consuming device comprising the electrochemical device, wherein the electrochemical device comprises a positive electrode plate and an electrolyte solution, the positive electrode plate comprising a positive electrode current collector and a positive electrode active material layer provided on at least one surface of the positive electrode current collector, the positive electrode active material layer containing a positive electrode lithium supplement; wherein the positive electrode lithium supplement comprises one or more of $Li_2M^1O_2$, $Li_2M^2O_3$, $Li_3M^3O_4$, $Li_5M^4O_4$, and $Li_6M^5O_4$, wherein $M^1$ comprises one or more of Ni, Co, Fe, Mn, Zn, Mg, Ca, and Cu, $M^2$ comprises one or more of Mn, Sn, Mo, Ru, and Ir, $M^3$ comprises one or more of V, Nb, Cr, and Mo, $M^4$ comprises one or more of Fe, Cr, V, and Mo, and $M^5$ comprises one or more of Co, V, Cr, and Mo; and the electrolyte solution comprises a lithium salt, wherein the molarity of the lithium salt in the electrolyte solution is A, and 1.5 mol/L≤A≤4 mol/L.

EP 4 195 348 A1

## Description

### Technical Field

The present application relates to the field of electrochemistry, and in particular, to an electrochemical device and a power consuming device comprising the electrochemical device.

### Background Art

Lithium-ion batteries, due to their characteristics such as high operating potential, long life, and environmental friendliness, have become the most popular energy storage systems, and are now widely used in fields such as pure electric vehicles, hybrid electric vehicles, and smart grids. However, the current lithium-ion batteries are difficult to meet the higher requirement for battery service life, and it is particularly urgent to develop a lithium-ion battery with higher energy density.

At present, in order to improve the energy density of lithium-ion batteries, it is an effective method to pre-supplement the positive electrode or negative electrode with lithium. The lithium pre-supplementing method can effectively compensate for the consumption of active lithium in the cycle process of lithium-ion batteries. However, although the energy density of lithium-ion batteries using lithium pre-supplementing technology can be effectively improved, the high temperature cycle performance and high temperature storage performance are often seriously deteriorated.

Therefore, how to improve the energy density of lithium-ion batteries while ensuring good high temperature cycle performance and high temperature storage performance of lithium-ion batteries has become an important issue that needs to be solved urgently in the wide application of secondary batteries.

### Summary of the Invention

The present application has been made in view of the above-mentioned problems, and the purpose thereof is to improve the high temperature cycle performance and high temperature storage performance of a high-energy-density electrochemical device.

In order to achieve the above purpose, the present application provides an electrochemical device and a power consuming device comprising the electrochemical device.

A first aspect of the present application provides an electrochemical device comprising a positive electrode plate and an electrolyte solution, the positive electrode plate comprising a positive electrode current collector and a positive electrode active material layer provided on at least one surface of the positive electrode current collector, the positive electrode active material layer containing a positive electrode lithium supplement; wherein the positive electrode lithium supplement comprises one or more of $Li_2M^1O_2$, $Li_2M^2O_3$, $Li_3M^3O_4$, $Li_5M^4O_4$, and $Li_6M^5O_4$, wherein $M^1$ comprises one or more of Ni, Co, Fe, Mn, Zn, Mg, Ca, and Cu, $M^2$ comprises one or more of Mn, Sn, Mo, Ru, and Ir, $M^3$ comprises one or more of V, Nb, Cr, and Mo, $M^4$ comprises one or more of Fe, Cr, V, and Mo, and $M^5$ comprises one or more of Co, V, Cr, and Mo; and the electrolyte solution contains a lithium salt, wherein the molarity of the lithium salt in the electrolyte solution is A, and $1.5mol/L \leq A \leq 4mol/L$. Thus, the high temperature cycle performance and high temperature storage performance of the electrochemical device can be improved by providing the positive electrode lithium supplement and setting the molarity of the lithium salt in the electrolyte solution in the electrochemical device.

In any embodiment, the molarity of the lithium salt in the electrolyte solution is A, and $2mol/L \leq A \leq 3mol/L$. The improvement effect of high temperature cycle performance and high temperature storage performance of the electrochemical device is better.

In any embodiment, the mass percentage content of the positive electrode lithium supplement based on the mass of the positive electrode active material layer is $W_1$, and $0.1\% \leq W_1 \leq 10\%$. Controlling the mass percentage content $W_1$ of the positive electrode lithium supplement within the above range can effectively improve the energy density and cycle performance of the electrochemical device.

In any embodiment, the mass percentage content of the positive electrode lithium supplement based on the mass of the positive electrode active material layer is $W_1$, and $1\% \leq W_1 \leq 8\%$. When the mass percentage content $W_1$ of the positive electrode lithium supplement is controlled within the above range, the energy density and cycle performance of the electrochemical device can be improved more effectively.

In any embodiment, the positive electrode lithium supplement comprises one or more of $Li_2NiO_2$, $Li_2CuO_2$, $Li_2Ni_aCu_bM_{1-a-b}O_2$, $Li_2MnO_2$, $Li_3VO_4$, $Li_3NbO_4$, $Li_5FeO_4$ and $Li_6CoO_4$; preferably, the positive electrode lithium supplement comprises one or more of $Li_2NiO_2$, LizCuOz, $Li_2Ni_aCu_bM_{1-a-b}O_2$, $Li_5FeO_4$, and $Li_6CoO_4$; wherein M comprises one or more of Zn, Sn, Mg, Fe and Mn; $0<a<1$, $0<b<1$, and $0.9<a+b\leq 1$. Preferably, $0.4\leq a\leq 0.8$, and $0.2\leq b\leq 0.6$. More preferably, $0.5\leq a\leq 0.7$, and $0.3\leq b\leq 0.5$. The selection of the above positive electrode lithium supplement can effectively improve the energy density and cycle performance of the electrochemical device.

In any embodiment, the lithium salt comprises at least one of $LiN(C_tF_{2t+1}SO_2)(C_sF_{2s+1}SO_2)$, $LiPF_6$, $LiBF_4$, LiBOB, $LiAsF_6$, Li(FSOz)zN, $LiCF_3SO_3$ and $LiClO_4$, and t≥0, and s≥0; preferably, the lithium salt comprises at least one of LiFSI and $LiPF_6$. The selection of the above lithium salt can effectively improve the cycle performance of the electrochemical device.

In any embodiment, the electrolyte solution further comprises an additive comprising at least one of a fluorosulfonate salt and a cyclic sulfate ester; wherein the mass percentage content of the additive based on the mass of the electrolyte solution is $W_2$, and $0.01\% \leq W_2 \leq 20\%$. Preferably, $0.1\% \leq W_2 \leq 10\%$. By adding the additive into the electrolyte solution, the high temperature cycle performance and high temperature storage performance of the electrochemical device can be effectively improved.

In any embodiment, the fluorosulfonate salt is $(FSO_3)_rQ^{r+}$, wherein $Q^{r+}$ comprises at least one of $Li^+$, $Na^+$, $K^+$, $Rb^+$, $Cs^+$, $Mg^{2+}$, $Ca^{2+}$, $Ba^{2+}$, $Al^{3+}$, $Fe^{2+}$, $Cu^{2+}$, $Fe^{3+}$, $Ni^{2+}$, and $Ni^{3+}$.

In any embodiment, the cyclic sulfate ester comprises a compound D represented by the general formula (I):

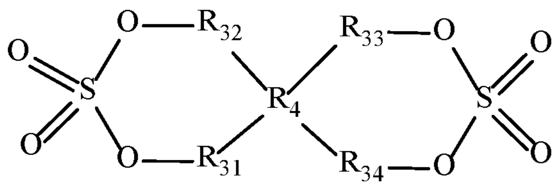

(I),

wherein in the general formula (I), $R_{31}$ to $R_{34}$ are each independently selected from a single bond or a methylene group, $R_4$ is selected from

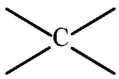
,
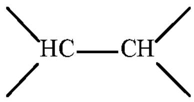
, or
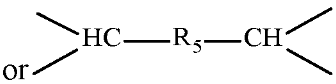
,

and $R_5$ is selected from $C_1$ to $C_3$ alkylene, $C_1$ to $C_3$ haloalkylene or $C_1$ to $C_3$ alkyleneoxy, and the halogen atom in $C_1$ to $C_3$ haloalkylene comprises fluorine, chlorine, bromine, or iodine.

In any embodiment, the cyclic sulfate ester comprises at least one of the following compounds I-1 to I-6:

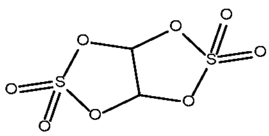
I-1

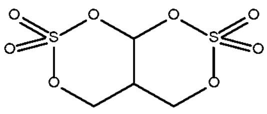
I-2

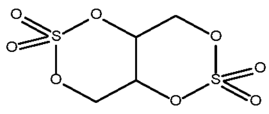
I-3

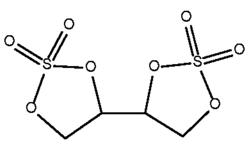
I-4

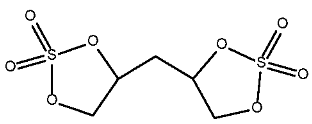
I-5

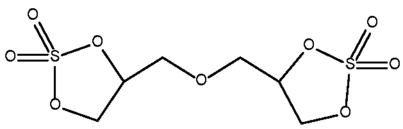
I-6

.

In any embodiment, the electrochemical device further comprises a negative electrode plate, wherein the specific surface area of the negative electrode plate is B, and $0.5\ m^2/g \leq B \leq 3.5\ m^2/g$. Preferably, $0.8\ m^2/g \leq B \leq 2.5\ m^2/g$. By controlling the specific surface area B of the negative electrode plate within the above range, the electrochemical device can have excellent high temperature cycle performance and high temperature storage performance while normally exerting its capacity.

A second aspect of the present application provides a power consuming device comprising the electrochemical device according to the first aspect of the present application. Therefore, the power consuming device of the present application has good high temperature cycle performance and high temperature storage performance.

Beneficial effects of this application:

the present application provides an electrochemical device and a power consuming device comprising the electrochemical device, wherein the electrochemical device comprises a positive electrode plate and an electrolyte solution, the positive electrode plate comprises a positive electrode current collector and a positive electrode active material layer provided on at least one surface of the positive electrode current collector, and the positive electrode active material layer contains a positive electrode lithium supplement. The electrolyte solution comprises a lithium salt, and the molarity of the lithium salt in the electrolyte solution is A, and 1.5 mol/L≤A≤4 mol/L. By providing the positive electrode lithium supplement and setting the molarity of the lithium salt in the electrolyte solution in the electrochemical device, the electrochemical device has both good high temperature cycle performance and high temperature storage performance while having high energy density. And also, the power consuming device comprising the electrochemical device has a long battery service life, as well as good high temperature cycle performance and high temperature storage performance.

Certainly, any product or method for implementing the present application are not necessarily required to achieve all of the above advantages simultaneously.

## Detailed Description of Embodiments

"Ranges" disclosed in the present application are defined in the form of lower and upper limits, and a given range is defined by selection of a lower limit and an upper limit, the selected lower and upper limits defining the boundaries of the particular range. Ranges defined in this manner may be inclusive or exclusive, and may be arbitrarily combined, that is, any lower limit may be combined with any upper limit to form a range. For example, if the ranges of 60-120 and 80-110 are listed for a particular parameter, it should be understood that the ranges of 60-110 and 80-120 are also contemplated. Additionally, if minimum range values 1 and 2 are listed, and maximum range values 3, 4, and 5 are listed, the following ranges are all contemplated: 1-3, 1-4, 1-5, 2-3, 2-4, and 2-5. In the present application, unless stated otherwise, the numerical range "a-b" denotes an abbreviated representation of any combination of real numbers between a and b, where both a and b are real numbers. For example, the numerical range "0-5" means that all real numbers between "0-5" have been listed herein, and "0-5" is just an abbreviated representation of combinations of these numerical values. In addition, when a parameter is expressed as an integer of ≥ 2, it is equivalent to disclosing that the parameter is, for example, an integer of 2, 3, 4, 5, 6, 7, 8, 9, 10, 11, 12, and the like.

All the embodiments and preferable/optional embodiments of the present application can be combined with one another to form new technical solutions, unless otherwise stated.

All technical features and preferable/optional technical features of the present application can be combined with one another to form a new technical solution, unless otherwise stated.

The terms "comprise" and "include" mentioned in the present application are openended or closed-ended, unless otherwise stated. For example, "comprise" and "include" may mean that other components not listed may further be comprised or included, or only the listed components may be comprised or included.

In the present application, the term "or" is inclusive unless otherwise specified. For example, the phrase "A or B" means "A, B, or both A and B." More specifically, a condition "A or B" is satisfied by any one of the following: A is true (or present) and B is false (or not present); A is false (or not present) and B is true (or present); or both A and B are true (or present).

In the first charge process of a lithium-ion battery, the formation of a solid electrolyte interface (SEI) film on a surface of the negative electrode will consume a large amount of a lithium source and convert the lithium into inactive lithium-containing compounds, such as lithium carbonate, lithium fluoride and alkyl lithium, which results in the loss of cyclable lithium and thus reduces the first coulombic efficiency and capacity of the lithium-ion battery. In a battery system using a graphite negative electrode, about 10% of the lithium source is consumed for the first charge, and the first coulombic efficiency is about 90%. When high-specific-volume negative electrode materials such as alloys (silicon, tin, aluminum), oxides (silicon oxide, tin oxide, titanium oxide) and amorphous carbon are used, the consumption of the lithium source may be further exacerbated.

At present, in order to compensate for the consumption of lithium in the above situation and further improve the energy density of lithium-ion batteries, the positive electrode or the negative electrode is often pre-supplemented with lithium. The applicant has found in the research process on positive electrode lithium supplementing of a lithium-ion battery that a positive electrode lithium supplement is prone to irreversible phase transition into metal oxides in the first charge process of the lithium-ion battery. Such metal oxides are always present in the positive electrode, and when the positive electrode is under the condition of a high temperature (≥60 °C), the metal oxides will be partially dissolved in the electrolyte solution, and then the metal ions evolute and are reduced in the negative electrode, which will destroy the stability of the SEI film and lead to the deterioration of high temperature cycle performance and high temperature storage performance of the lithium-ion battery. Therefore, by reducing the formation of the metal oxides in the metal electrolyte solution, the lithium-ion battery can be enabled to have both good high temperature cycle performance and high temperature storage performance while ensuring the high energy density, which has become the key research direction of the applicant. Based on this, the present application provides an electrochemical device and a power consuming device comprising the electrochemical device.

In some embodiments of the present application, the present application provides an electrochemical device comprising a positive electrode plate and an electrolyte solution, the positive electrode plate comprising a positive electrode current collector and a positive electrode active material layer provided on at least one surface of the positive electrode current collector, the positive electrode active material layer containing a positive electrode lithium supplement; wherein the positive electrode lithium supplement comprises one or more of $Li_2M^1O_2$, $Li_2M^2O_3$, $Li_3M^3O_4$, $Li_5M^4O_4$, and $Li_6M^5O_4$, wherein $M^1$ comprises one or more of Ni, Co, Fe, Mn, Zn, Mg, Ca, and Cu, $M^2$ comprises one or more of Mn, Sn, Mo, Ru, and Ir, $M^3$ comprises one or more of V, Nb, Cr, and Mo, $M^4$ comprises one or more of Fe, Cr, V, and Mo, and $M^5$ comprises one or more of Co, V, Cr, and Mo; and the electrolyte solution contains a lithium salt, and the molarity of the lithium salt in the electrolyte solution is A, and 1.5 mol/L≤A≤4 mol/L.

Although the mechanism is not yet clear, the applicant has unexpectedly discovered: in the present application, the positive electrode lithium supplement is added to the positive electrode active material layer, such that the positive electrode lithium supplement provides an excess of a lithium source in the first charge process of the lithium-ion battery, which compensates for the consumption of lithium due to the formation of the SEI film on the surfaces of the positive electrode and the negative electrode, thereby improving the energy density and cycle performance of the electrochemical device. The molarity of the lithium salt in the electrolyte solution is A and 1.5 mol/L≤A≤4 mol/L, and by providing this high molarity of the lithium salt in the electrolyte solution, the free solvent molecules in the electrolyte solution can be reduced or even completely eliminated, which in turn reduces the dissolution of metal oxides in the electrolyte solution, such that the risk of destroying the components of the SEI film after the metal ions evolute in the negative electrode can be reduced. In addition, the electrolyte solution having the high concentration of the lithium salt can form a dense and high-toughness solid electrolyte film on the surfaces of the positive electrode and the negative electrode, respectively, which can reduce the damage of the transition metal that evolutes in the negative electrode to the SEI film. Therefore, the high temperature cycle performance and high temperature storage performance of the electrochemical device are effectively improved.

In some embodiments , the molarity A of the lithium salt in the electrolyte solution is a numerical value ranging from 1.5mol/L to 4mol/L, for example, 1.6mol/L, 1.7mol/L, 1.8mol/L, 1.9mol/L, 2.0mol/L, 2.1mol/L, 2.2mol/L, 2.3mol/L, 2.4mol/L, 2.5mol/L, 2.6mol/L, 2.7mol/L, 2.8mol/L, 2.9mol/L, 3.0mol/L, 3.1mol/L, 3.2mol/L, 3.3mol/L, 3.4mol/L, 3.5mol/L, 3.6mol/L, 3.7mol/L, 3.8mol/L, 3.9mol/L, 4.0 mol/L, or its numerical value is in a range obtained by combining any two of the above-mentioned numerical values. Optionally, 2mol/L≤A≤3.5mol/L, 2mol/L≤A≤3mol/L, 2.5mol/L≤A≤4mol/L, or 2.5mol/L≤A≤3.5mol/L. The inventors have found through research that when the molarity A of the lithium salt in the electrolyte solution is controlled within the above range, the free solvent molecules in the electrolyte solution are basically eliminated, and the solvent in the electrolyte solution basically exists in a solvated form, which, while saving the production cost, can further effectively reduce the dissolution of metal oxides in the electrolyte solution, and reduce the risk of destroying the components of the SEI film after the metal ions evolute in the negative electrode. Also, when the molarity A of the lithium salt in the electrolyte solution is controlled within the above-mentioned range, a dense and high-toughness solid electrolyte film is formed on the surfaces of the positive electrode and the negative electrode, respectively, which can further reduce the damage of the transition metal that evolutes in the negative electrode to the SEI film. The improvement effect of high temperature cycle performance and high temperature storage performance of the electrochemical device is better.

In some embodiment, the mass percentage content of the positive electrode lithium supplement based on the mass of the positive electrode active material layer is $W_1$, and 0.1%≤$W_1$≤10%. The mass percentage content $W_1$ of the positive electrode lithium supplement is a numerical value of 0.1% to 10%, for example, 0.5%, 1.0%, 1.5%, 2.0%, 2.5%, 3.0%, 3.5%, 4.0%, 4.5%, 5.0% %, 5.5%, 6.0%, 6.5%, 7.0%, 7.5%, 8.0%, 8.5%, 9.0%, 9.5%, 10%, or its numerical value is in a range obtained by combining any two of the above-mentioned numerical values. Preferably, 1%≤$W_1$≤8%. More preferably, 1%≤$W_1$≤5%. The mass percentage content $W_1$ of the positive electrode lithium supplement is controlled within the above range, such that the positive electrode lithium supplement provides a sufficient amount of a lithium source in the first charge process of the lithium-ion battery, which effectively compensates for the consumption of lithium due to the formation of the SEI film on the surfaces of the positive electrode and the negative electrode, thereby effectively improving the energy density and cycle performance of the electrochemical device.

In some embodiment, the positive electrode lithium supplement comprises one or more of $Li_2NiO_2$, $Li_2CuO_2$, $Li_2Ni_aCu_bM_{1-a-b}O_2$, $Li_2MnO_2$, $Li_3VO_4$, $Li_3NbO_4$, $Li_5FeO_4$ and $Li_6CoO_4$; preferably, the positive electrode lithium supplement comprises one or more of $Li_2NiO_2$, LizCuOz, $Li_2Ni_aCu_bM_{1-a-b}O_2$, $Li_5FeO_4$, and $Li_6CoO_4$; wherein M comprises one or more of Zn, Sn, Mg, Fe and Mn; 0<a<1, 0<b<1, and 0.9<a+b≤1. Preferably, 0.4≤a≤0.8, and 0.2≤b≤0.6. More preferably, 0.5≤a≤0.7, and 0.3≤b≤0.5. The selection of the above-mentioned positive electrode lithium supplement can provide a sufficient amount of a lithium source for the first charge process of the lithium-ion battery, which effectively compensates for the consumption of lithium due to the formation of the SEI film on the surfaces of the positive electrode and the negative electrode, thereby effectively improving the energy density and cycle performance of the electrochemical device.

In some embodiment, the lithium salt comprises at least one of $LiN(C_tF_{2t+1}SO_2)(C_sF_{2s+1}SO_2)$, $LiPF_6$, $LiBF_4$,

LiBOB, $LiAsF_6$, Li(FSOz)zN, $LiCF_3SO_3$ and $LiClO_4$, and t≥0, and s≥0. Preferably, the lithium salt comprises at least one of LiFSI and $LiPF_6$. The selection of the above-mentioned lithium salt enables the electrolyte solution to have good ionic conductivity, which can effectively improve the cycle performance of the electrochemical device. The selection of the lithium salt within the preferred range enables the electrolyte solution to have better ionic conductivity, thereby improving the cycle performance of the electrochemical device.

In some embodiment, the electrolyte solution further comprises an additive comprising at least one of a fluorosulfonate salt and a cyclic sulfate ester; wherein the mass percentage content of the additive based on the mass of the electrolyte solution is $W_2$, and $0.01\% \leq W_2 \leq 20\%$. The mass percentage content $W_2$ of the additive is a numerical value of 0.01% to 20%, for example, 0.01%, 0.1%, 0.5%, 1.0%, 1.5%, 2.0%, 2.5%, 3.0%, 3.5%, 4.0%, 4.5% %, 5.0%, 5.5%, 6.0%, 6.5%, 7.0%, 7.5%, 8.0%, 8.5%, 9.0%, 9.5%, 10%, 10.5%, 11.0%, 11.5%, 12.0%, 12.5%, 13.0%, 13.5%, 14.0%, 14.5%, 15.0%, 15.5%, 16.0%, 16.5%, 17.0%, 17.5%, 18.0%, 18.5%, 19.0%, 19.5%, 20%, or its numerical value is in a range obtained by combining any two of the above-mentioned numerical values. Preferably, $0.1\% \leq W_2 \leq 10\%$. By adding the additive to the electrolyte solution, a layer of SEI film is formed on the surfaces of the positive electrode and the negative electrode, respectively. The generation of the SEI film can not only prevent the dissolution of metal oxides in the electrolyte solution, but also reduce the damage of the transition metal that evolutes in the negative electrode to the SEI film. The inventors have found through research that when the content of the above additive is higher, the impedance of the positive electrode and the negative electrode is likely to increase, which will affect the capacity availability of the electrochemical device. By regulating the mass percentage content $W_2$ of the additive within the above range, the additive can effectively prevent the dissolution of metal oxides in the electrolyte solution, and minimize the damage of the transition metal that evolutes in the negative electrode to the SEI film, thereby effectively improving the high temperature cycle performance and high temperature storage performance of the electrochemical device.

In some embodiment, the fluorosulfonate salt is $(FSO_3)_rQ^{r+}$, wherein $Q^{r+}$ comprises at least one of $Li^+$, $Na^+$, $K^+$, $Rb^+$, $Cs^+$, $Mg^{2+}$, $Ca^{2+}$, $Ba^{2+}$, $Al^{3+}$, $Fe^{2+}$, $Cu^{2+}$, $Fe^{3+}$, $Ni^{2+}$, and $Ni^{3+}$.

In some embodiments, the cyclic sulfate ester comprises a compound D represented by the general formula (I):

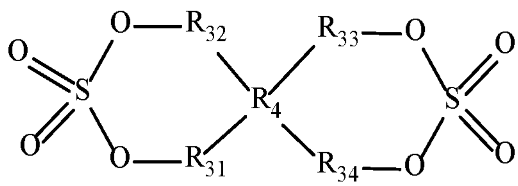

(I),

wherein in the general formula (I), $R_{31}$ to $R_{34}$ are each independently selected from a single bond or a methylene group, $R_4$ is selected from

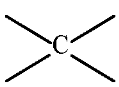, 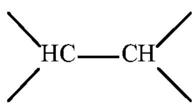, or 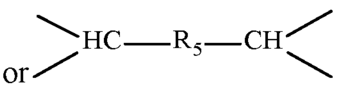,

and $R_5$ is selected from $C_1$ to $C_3$ alkylene, $C_1$ to $C_3$ haloalkylene or $C_1$ to $C_3$ alkyleneoxy, and the halogen atom in $C_1$ to $C_3$ haloalkylene comprises fluorine, chlorine, bromine, or iodine.

Preferably, the cyclic sulfate ester comprises at least one of the following compounds I-1 to 1-6:

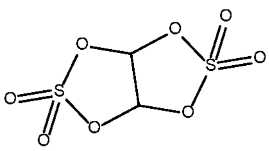

I-1

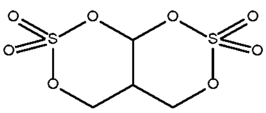

I-2

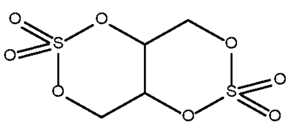

I-3

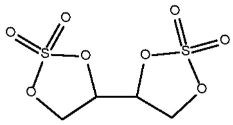

I-4

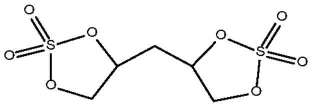

I-5

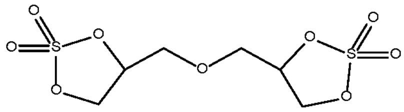

I-6

.

In some embodiments, the electrochemical device further comprises a negative electrode plate, wherein the specific surface area of the negative electrode plate is B, and $0.5\ m^2/g \le B \le 3.5\ m^2/g$. Preferably, $0.8\ m^2/g \le B \le 2.5\ m^2/g$. The smaller the specific surface area of the negative electrode plate, the smaller the contact area of the transition metal that evolutes in the negative electrode plate and the negative electrode plate, and the smaller the damage to the SEI film formed on the negative electrode plate, thereby reducing the deterioration of the high temperature cycle performance and high temperature storage performance of the electrochemical device. However, if the specific surface area of the negative electrode plate is too small, the polarization of the electrochemical device will be too large, which will affect the capacity availability of the electrochemical device. When the specific surface area of the negative electrode plate is too large, the contact area of the electrolyte solution and the negative electrode plate will increase, thereby affecting the capacity availability, high temperature cycle performance and high temperature storage performance of the electrochemical device. By controlling the specific surface area B of the negative electrode plate within the above range, the electrochemical device can have excellent high temperature cycle performance and high temperature storage performance while normally exerting its capacity. When the specific surface area B of the negative electrode plate is in the above preferred range, the electrochemical device has more excellent high temperature cycle performance and high temperature storage performance.

Generally, a lithium-ion battery comprises a positive electrode plate, a negative electrode plate, an electrolyte and a separator. During the charge/discharge process of the battery, active ions are intercalated and de-intercalated back and forth between the positive electrode plate and the negative electrode plate. The electrolyte is located between the positive electrode plate and the negative electrode plate and functions for ionic conduction. The separator is provided between the positive electrode plate and the negative electrode plate, and mainly prevents the positive electrode and the negative electrode from shortcircuiting and enables active ions to pass through.

[Positive electrode plate]

The positive electrode plate comprises a positive electrode current collector and a positive electrode active material layer provided on at least one surface of the positive electrode current collector, wherein the positive electrode active material layer comprises a positive electrode active material.

As an example, the positive electrode current collector has two surfaces opposite in its own thickness direction, and the positive electrode active material layer is provided on either or both of the two opposite surfaces of the positive electrode current collector.

In some embodiments, the positive electrode current collector can be a metal foil or a composite current collector. For example, as a metal foil, an aluminum foil can be used. The composite current collector may comprise a polymer material substrate and a metal layer formed on at least one surface of the polymer material substrate. The composite current collector can be formed by forming a metal material (aluminum, an aluminum alloy, nickel, a nickel alloy, titanium, a titanium alloy, silver and a silver alloy, etc.) on a polymer material substrate (e.g., polypropylene (PP), polyethylene terephthalate (PET), polybutylene terephthalate (PBT), polystyrene (PS), polyethylene (PE), etc.).

In some embodiments, the positive electrode active material can be a positive electrode active material known in the art for batteries. As an example, the positive electrode active material may include at least one of the following materials: lithium-containing phosphates of an olivine structure, lithium transition metal oxides and their respective modified compounds. However, the present application is not limited to these materials, and other conventional materials that can be used as positive electrode active materials for batteries may also be used. These positive electrode active materials may be used alone or in combination of two or more. Among them, examples of lithium transition metal oxides may include, but are not limited to, at least one of lithium cobalt oxide (e.g. $LiCoO_2$), lithium nickel oxide (e.g. LiNiOz), lithium manganese oxide (e.g. $LiMnO_2$, $LiMn_2O_4$), lithium nickel cobalt oxide, lithium manganese cobalt oxide, lithium nickel manganese oxide, lithium nickel cobalt manganese oxide (e.g. $LiNi_{1/3}Co_{1/3}Mn_{1/3}O_2$ (also referred to as $NCM_{333}$)), $LiNi_{0.5}Co_{0.2}Mn_{0.3}O_2$ (also referred to as $NCM_{523}$), $LiNi_{0.5}Co_{0.25}Mn_{0.25}O_2$ (also referred to as $NCM_{211}$), $LiNi_{0.6}Co_{0.2}Mn_{0.2}O_2$ (also referred to as $NCM_{622}$), $LiNi_{0.8}Co_{0.1}Mn_{0.1}O_2$ (also referred to as $NCM_{811}$), lithium nickel cobalt aluminum oxide (e.g. $LiNi_{0.85}Co_{0.15}Al_{0.05}O_2$), and modified compounds thereof, and the like. Examples of lithium-containing phosphates of olivine structure may include, but are not limited to, at least one of lithium iron phosphate (e.g. $LiFePO_4$ (also referred to as LFP)), lithium iron phosphate and carbon composites, lithium manganese phosphate (e.g. $LiMnPO_4$), lithium manganese phosphate and carbon composites, lithium iron manganese phosphate, and lithium iron

manganese phosphate and carbon composites.

In some embodiments, the positive electrode active material layer may also optionally comprise a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin.

In some embodiments, the positive electrode active material layer may also optionally comprise a conductive agent. As an example, the conductive agent may include at least one of superconducting carbon, acetylene black, carbon black, Ketjen black, carbon dots, carbon nanotubes, graphene, and carbon nanofibers.

In some embodiments, the positive electrode plate can be prepared as follows: the above-mentioned components for preparing the positive electrode plate, such as positive electrode active material, conductive agent, binder and any other components, are dispersed in a solvent (e.g. N-methylpyrrolidone) to form a positive electrode slurry; and the positive electrode slurry is coated onto at least one surface of a positive electrode current collector, and is then subjected to procedures such as drying and cold pressing to obtain the positive electrode plate.

[Negative electrode plate]

The negative electrode plate comprises a negative electrode current collector and a negative electrode active material layer provided on at least one surface of the negative electrode current collector, the negative electrode active material layer comprising a negative electrode active material.

As an example, the negative electrode current collector has two opposite surfaces in its own thickness direction, and the negative electrode active material layer is provided on either or both of the two opposite surfaces of the negative electrode current collector.

In some embodiments, the negative electrode current collector can be a metal foil or a composite current collector. For example, as a metal foil, a copper foil can be used. The composite current collector may comprise a polymer material substrate and a metal layer formed on at least one surface of the polymer material substrate. The composite current collector can be formed by forming a metal material (copper, a copper alloy, nickel, a nickel alloy, titanium, a titanium alloy, silver and a silver alloy, etc.) on a polymer material substrate (e.g., polypropylene (PP), polyethylene terephthalate (PET), polybutylene terephthalate (PBT), polystyrene (PS), polyethylene (PE), etc.).

In some embodiments, the negative electrode active material can be a negative electrode active material known in the art for batteries. As an example, the negative electrode active material may include at least one of the following materials: artificial graphite, natural graphite, soft carbon, hard carbon, a silicon-based material, a tin-based material and lithium titanate, etc. The silicon-based material may be selected from at least one of elemental silicon, silicon oxides, silicon carbon composites, silicon nitrogen composites and silicon alloys. The tin-based material may be selected from at least one of elemental tin, tin oxides, and tin alloys. However, the present application is not limited to these materials, and other conventional materials that can be used as negative electrode active materials for batteries can also be used. These negative electrode active materials may be used alone or in combination of two or more.

In some embodiments, the negative electrode active material layer may also optionally comprise a binder. The binder may be selected from at least one of a butadiene styrene rubber (SBR), polyacrylic acid (PAA), sodium polyacrylate (PAAS), polyacrylamide (PAM), polyvinyl alcohol (PVA), sodium alginate (SA), polymethacrylic acid (PMAA) and carboxymethyl chitosan (CMCS).

In some embodiments, the negative electrode active material layer may also optionally comprise a conductive agent. The conductive agent may be selected from at least one of superconductive carbon, acetylene black, carbon black, ketjenblack, carbon dots, carbon nanotubes, graphene, and carbon nanofibers.

In some embodiments, the negative electrode active material layer may also optionally comprises other auxiliary agents, for example thickener (e.g. sodium carboxymethyl cellulose (CMC-Na)) and the like.

In some embodiments, the negative electrode plate can be prepared as follows: the above-mentioned components for preparing the negative electrode plate, such as negative electrode active material, conductive agent, binder and any other components, are dispersed in a solvent (e.g. deionized water) to form a negative electrode slurry; and the negative electrode slurry is coated onto at least one surface of a negative electrode current collector, and is then subjected to procedures such as drying and cold pressing to obtain the negative electrode plate.

[Electrolyte]

The electrolyte is located between the positive electrode plate and the negative electrode plate and functions for ionic conduction. The type of the electrolyte is not specifically limited in the present application, and can be selected according to actual requirements. For example, the electrolyte may be liquid, gel or all solid.

In some embodiments, an electrolyte solution is used as the electrolyte. The electrolyte solution comprises a solvent and the lithium salt of the present application.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, and diethyl sulfone.

In some embodiments, the electrolyte solution also comprises the additive of the present application.

[Separator]

In some embodiments, the lithium-ion battery further comprises a separator. The type of the separator is not particularly limited in the present application, and any well known porous-structure separator with good chemical stability and mechanical stability may be selected.

In some embodiments, the material of the separator can be selected from at least one of glass fibers, a non-woven, polyethylene, polypropylene and polyvinylidene fluoride. The separator may be a single-layer film and also a multi-layer composite film, and is not limited particularly. When the separator is a multi-layer composite film, the materials in the respective layers may be same or different, which is not limited particularly.

In some embodiments, an electrode assembly may be formed by a positive electrode plate, a negative electrode plate and a separator by a winding process or a laminating process.

In some embodiments, the electrochemical device may comprise an outer package. The outer package can be used to encapsulate the above-mentioned electrode assembly and electrolyte.

In some embodiments, the outer package of the electrochemical device can be a hard shell, for example, a hard plastic shell, an aluminum shell, a steel shell, etc. The outer package of the lithium-ion battery can also be a soft bag, for example, a pouch-type soft bag. The material of the soft bag may be plastics, and the examples of plastics may include polypropylene, polybutylene terephthalate, and polybutylene succinate, etc.

The shape of the electrochemical device is not particularly limited in the present application, and may be cylindrical, square or of any other shape.

The electrochemical device of the present application is not particularly limited, and may comprise any device in which an electrochemical reaction occurs. In some embodiments, the electrochemical device may include, but is not limited to: a lithium metal secondary battery, a lithium-ion secondary battery (lithium-ion battery), a lithium polymer secondary battery, or a lithium-ion polymer secondary battery, or the like.

The preparation process of the electrochemical device is well known to those skilled in the art, and there is no particular limitation in this application, and for example, the preparation process may include but not limited to the following steps: the positive electrode plate, separator and negative electrode plate are stacked in sequence, followed by winding and folding and like as needed, to obtain an electrode assembly of a wound structure, and the electrode assembly is placed into a package shell, and the electrolyte solution is injected into the package shell and sealed, to obtain an electrochemical device; alternatively, the positive electrode plate, separator and negative electrode plate are stacked in sequence, and then the four corners of the entire laminated structure are fixed with an adhesive tape to obtain an electrode assembly of a laminated structure, and the electrode assembly is placed into a package shell, and the electrolyte solution is injected into the package shell and sealed, to obtain an electrochemical device. In addition, if necessary, an over-current preventing element, a guide plate, etc. may be placed in the package shell, thereby preventing pressure rise and over-charge/discharge inside the electrochemical device.

Further, the present application also provides a power consuming device, comprising the electrochemical device provided by the present application. Since the electrochemical device of the present application has good high temperature cycle performance and high temperature storage performance, the power consuming device of the present application also has good high temperature cycle performance and high temperature storage performance. The power consuming device of the present application may include but are not limited to: a mobile device (e.g., a mobile phone, a laptop computer, etc.), an electric vehicle (e.g., a pure electric vehicle, a hybrid electric vehicle, a plug-in hybrid electric vehicle, an electric bicycle, an electric scooter, an electric golf cart, an electric truck), an electric train, ship, and satellite, an energy storage system, and the like.

## Examples

Hereinafter, the examples of the present application will be explained. The examples described below are exemplary and are merely for explaining the present application, and should not be construed as limiting the present application. The techniques or conditions that are not specified in examples are according to the techniques or conditions described in documents in the art or the product introduction. The reagents or instruments used, if they are not marked with the manufacturer, are common products that are commercially available.

## Example 1

<Preparation of positive electrode plate>

A positive electrode active material lithium iron phosphate, a positive electrode lithium supplement $Li_2Cu_{0.6}Ni_{0.4}O_2$, a binder polyvinylidene fluoride (PVDF), and a conductive agent acetylene black were mixed in the mass ratio of (97-$W_1$) : $W_1$ : 2 : 1, dissolved in a solvent N-methylpyrrolidone (NMP), and fully stirred and mixed uniformly, to make a positive electrode slurry with a solid content of 75%. The positive electrode slurry was uniformly coated onto one surface of a positive electrode current collector aluminum foil with a thickness of 10 μm, and dried at 130°C, followed by cold pressing, to obtain a positive electrode plate with a single-sided positive electrode active material layer with a thickness of 110 μm. After that, the above steps were repeated on the other surface of the positive electrode plate, to obtain a positive electrode plate provided with double-sided positive electrode active material layers. After the coating was completed, a positive electrode plate of 74 mm × 867 mm was obtained by drying, cold pressing and slitting, and the tabs were welded for use.

<Preparation of negative electrode plate>

A negative plate active material artificial graphite, a conductive agent acetylene black, a binder styrene-butadiene rubber (SBR), and a thickener sodium carboxymethyl cellulose (CMC) were mixed in the mass ratio of 95:2:2:1, deionized water was added as a solvent, and the mixture was fully stirred and mixed uniformly, to make a negative electrode slurry with a solid content of 60%. The negative electrode slurry was uniformly coated onto a negative electrode current collector copper foil with a thickness of 8 μm, and dried at 110°C, followed by cold pressing, to obtain a negative electrode plate with a single-sided negative electrode active material layer with a thickness of 100 μm. After that, the above steps were repeated on the other surface of the negative electrode plate, to obtain a negative electrode plate provided with double-sided negative electrode active material layers. After the coating was completed, a negative electrode plate of 76 mm×851 mm was obtained by drying, cold pressing and slitting, and the tabs were welded for use. Herein, the specific surface area B of the negative electrode plate was 1.5 $m^2$/g.

<Preparation of electrolyte solution>

In a glove box under argon atmosphere ($H_2O$<0.1 ppm, $O_2$<0.1 ppm), EC, DMC and EMC were mixed in a mass ratio of 1:1:1 to obtain an organic solvent, and then a lithium salt $LiPF_6$ was added to the organic solvent, dissolved and mixed uniformly to obtain an electrolyte solution, wherein the molarity A of the lithium salt in the aforementioned electrolyte solution was 1.5 mol/L.

<Preparation of separator>

A polypropylene (PP) film (supplied by Celgard) with a thickness of 14 μm was used.

<Preparation of lithium-ion battery>

The above-prepared positive electrode plate, separator and negative electrode plate were stacked in sequence, such that the separator was located between the positive electrode plate and the negative electrode plate to play a role of isolation, and winding is performed to obtain an electrode assembly. The electrode assembly was put into an aluminum plastic film shell, and dehydrated at 80°C, and the aforementioned electrolyte solution was injected, followed by procedures such as vacuum encapsulating, standing, forming, and shaping, to obtain a lithium-ion battery.

**Examples 2 to 6** were the same as in Example 1 except that the molarity A of the lithium salt in the electrolyte solution was adjusted as shown in Table 1.

**Examples 7 to 9** were the same as in Example 3 except that the type of the positive electrode lithium supplement was adjusted as shown in Table 1.

**Examples 10 to 14** were the same as in Example 3 except that the mass percentage content $W_1$ of the positive electrode lithium supplement was adjusted as shown in Table 1.

**Examples 15 to 16** were the same as in Example 3 except that the type of the lithium salt was adjusted as shown in Table 1.

**Example 17** was the same as in Example 3 except that an additive $Li(FSO_3)$ with a mass percentage content $W_2$=2% was added in the <Preparation of electrolyte solution>.

**Examples 18 to 24** were the same as in Example 17 except that the type of the additive was adjusted as shown in Table 2.

**Examples 25 to 30** were the same as in Example 21 except that the mass percentage content $W_2$ of the additive was adjusted as shown in Table 2.

**Examples 31 to 34** were the same as in Example 21 except that the specific surface area B of the negative electrode plate was adjusted as shown in Table 3.

**Comparative Examples 1 to 2** were the same as in Example 1 except that the molarity A of the lithium salt in the electrolyte solution was adjusted as shown in Table 1.

In addition, the lithium-ion batteries prepared in the above-mentioned Examples 1 to 34 and Comparative Examples 1 to 2 were tested for performance.

**(1) Test of specific surface area B**

According to GB/T 19584-2017 "Determination of the Specific Surface Area of Solids by Gas Adsorption Using the BET":

firstly, a sample under test was pre-treated: a special sample tube was filled with an appropriate amount of a sample, heated and vacuum degassed for 2 h, and, after cooling to room temperature, the total weight was weighed, from which the mass of the sample tube was subtracted to obtain the sample mass.

Then the obtained sample was tested: the sample tube was loaded into the workstation, and the adsorption of a gas on the solid surface was measured at different relative pressures at a constant low temperature (-195°C), and then the monomolecular layer adsorption of the specimen was found based on the Brown Noel-Emmet-Taylor adsorption theory and the formula thereof (BET formula), and thus the specific surface area B of the negative electrode plate was calculated.

BET formula:

$$\frac{P}{W(P0-P)} = \frac{1}{WmC} + (C-1)/(WmC) \cdot P/P0$$

wherein: W --- mass of gas adsorbed by solid sample under relative pressure (P/P0), in $cm^3/g$;
Wm --- gas saturation adsorption for a full monomolecular layer, in $cm^3/g$;
C---constant related to heat of adsorption and heat of condensation of the first layer;
Slope: (C - 1)/(WmC), intercept: 1/WmC, total surface area: St =(Wm×N×Acs/M);
Specific surface area: S=St/m, where m is the sample mass, Acs: average area occupied by each $N_2$ molecule of 16.2 $A^2$.

**(2) Gram capacity test of lithium-ion battery**

At 25°C, the lithium-ion battery prepared in each of the examples and comparative examples was charged to 3.65V at a constant current of 0.33C, and then charged at a constant voltage of 3.65V to a current of ≤0.05C, and then the lithium-ion battery was discharged at a constant current of 0.33C to 2.5V, and the actual discharge capacity of the lithium-ion battery was recorded as $C_0$ (mAh). Gram capacity of lithium-ion battery (mAh/g) = $C_0/W_3$. Herein, $W_3$ is the mass sum (g) of the positive electrode active material and the positive electrode lithium supplement.

**(3) Cycle performance test of lithium-ion battery**

At 60°C, the lithium-ion battery prepared in each of the examples and comparative examples was charged at a constant current of 1C to a voltage of 3.65V, and then charged at a constant voltage of 3.65V to a current of ≤0.05C, and then the battery was discharged at a constant current of 1C to a voltage of 2.5V, which was one charge-discharge process, and the discharge capacity at this time was recorded as the discharge capacity of the lithium-ion battery for the initial cycle. The above-mentioned charge-discharge process was cycled 500 times, and the discharge capacity after the 500th cycle was recorded as the discharge capacity of the lithium-ion battery for the 500th cycle. The capacity retention rate of the lithium-ion battery after 500 cycles was calculated.

The capacity retention rate (%) of a lithium-ion battery after 500 cycles at 60°C = (the discharge capacity of the lithium-ion battery for the 500th cycle/the discharge capacity of the lithium-ion battery for the initial cycle) × 100%.

**(4) Storage capacity retention test of lithium-ion battery**

At 25°C, the lithium-ion battery prepared in each of the above-mentioned examples and comparative examples was charged at a constant current of 0.33C to a voltage of 3.65V, and then charged at a constant voltage of 3.65V to a current of ≤0.05C; and then the lithium-ion battery was discharged at a constant current of 0.33C to a voltage of 2.5V, and the actual discharge capacity of the lithium-ion battery was recorded as $C_0$.

At 25°C, the lithium-ion battery was further charged at a constant current of $0.33C_0$ to a voltage of 3.65V, and then charged with a constant voltage of 3.65V to a current of ≤0.05 $C_0$, and at this time, the lithium-ion battery was fully charged. The fully charged lithium-ion battery was stored in an incubator at 60°C for 60 days, and then the lithium-ion battery was removed for capacity testing.

The capacity retention rate (%) of a lithium-ion battery after storage at 60°C for 60 days = (the discharge capacity of the lithium-ion battery after storage for 60 days/the actual discharge capacity of the lithium-ion battery $C_0$)×100%.

The preparation parameters and performance test results of Examples 1 to 16 and Comparative Examples 1 to 2 are shown in Table 1, the preparation parameters and performance test results of Examples 17 to 30 are shown in Table 2, and the preparation parameters and performance test results of Examples 31 to 34 are shown in Table 3:

**Table 1**

| | Positive electrode lithium supplement | | Lithium salt | | Gram capacity (mAg/h) | Capacity retention rate after 500 cycles at 60°C | Capacity retention rate after 60 days of storage at 60°C |
|---|---|---|---|---|---|---|---|
| | Type | Mass percentage content $W_1$ (%) | Type | Molarity A (mol/L) | | | |
| Example 1 | $Li_2Cu_{0.6}Ni_{0.4}O_2$ | 2 | $LiPF_6$ | 1.5 | 146.5 | 75.2% | 77.3% |
| Example 2 | $Li_2Cu_{0.6}Ni_{0.4}O_2$ | 2 | $LiPF_6$ | 2 | 146.0 | 81.0% | 82.4% |
| Example 3 | $Li_2Cu_{0.6}Ni_{0.4}O_2$ | 2 | $LiPF_6$ | 2.5 | 145.4 | 81.2% | 83.0% |
| Example 4 | $Li_2Cu_{0.6}Ni_{0.4}O_2$ | 2 | $LiPF_6$ | 3 | 144.7 | 77.6% | 79.1% |
| Example 5 | $Li_2Cu_{0.6}Ni_{0.4}O_2$ | 2 | $LiPF_6$ | 3.5 | 143.5 | 73.4% | 75.2% |
| Example 6 | $Li_2Cu_{0.6}Ni_{0.4}O_2$ | 2 | $LiPF_6$ | 4 | 141.8 | 70.3% | 71.6% |
| Example 7 | $Li_2NiO_2$ | 2 | $LiPF_6$ | 2.5 | 143.0 | 80.5% | 82.3% |
| Example 8 | $Li_2CuO_2$ | 2 | $LiPF_6$ | 2.5 | 143.2 | 79.2% | 81.3% |
| Example 9 | $Li_2Cu_{0.6}Ni_{0.4}Mg_{0.03}O_2$ | 2 | $LiPF_6$ | 2.5 | 145.1 | 80.9% | 82.7% |
| Example 10 | $Li_2Cu_{0.6}Ni_{0.4}O_2$ | 0.1 | $LiPF_6$ | 2.5 | 140.0 | 76.6% | 78.1% |
| Example 11 | $Li_2Cu_{0.6}Ni_{0.4}O_2$ | 1 | $LiPF_6$ | 2.5 | 144.7 | 79.7% | 81.0% |
| Example 12 | $Li_2Cu_{0.6}Ni_{0.4}O_2$ | 5 | $LiPF_6$ | 2.5 | 141.5 | 81.0% | 82.7% |
| Example 13 | $Li_2Cu_{0.6}Ni_{0.4}O_2$ | 8 | $LiPF_6$ | 2.5 | 138.8 | 78.5% | 80.2% |
| Example 14 | $Li_2Cu_{0.6}Ni_{0.4}O_2$ | 10 | $LiPF_6$ | 2.5 | 136.2 | 76.2% | 77.8% |
| Example 15 | $Li_2Cu_{0.6}Ni_{0.4}O_2$ | 2 | LiFSI | 2.5 | 145.8 | 73.2% | 75.1% |
| Example 16 | $Li_2Cu_{0.6}Ni_{0.4}O_2$ | 2 | LiFSI+ $LiPF_6$ | 2.5 | 145.9 | 81.0% | 82.8% |
| Comparative example 1 | $Li_2Cu_{0.6}Ni_{0.4}O_2$ | 2 | $LiPF_6$ | 1 | 147.0 | 70.1% | 71.5% |

(continued)

| | Positive electrode lithium supplement | | Lithium salt | | Gram capacity (mAg/h) | Capacity retention rate after 500 cycles at 60°C | Capacity retention rate after 60 days of storage at 60°C |
|---|---|---|---|---|---|---|---|
| | Type | Mass percentage content $W_1$ (%) | Type | Molarity A (mol/L) | | | |
| Comparative example 2 | $Li_2Cu_{0.6}Ni_{0.4}O_2$ | 2 | $LiPF_6$ | 5 | 140.2 | 68.2% | 69.4% |

**Table 2**

| | Additive | | Gram capacity (mAg/h) | Capacity retention rate after 500 cycles at 60°C | Capacity retention rate after 60 days of storage at 60°C |
|---|---|---|---|---|---|
| | Type | Mass percentage content $W_2$ (%) | | | |
| Example 17 | $Li(FSO_3)$ | 2 | 147.1 | 84.5% | 85.3% |
| Example 18 | $K(FSO_3)$ | 2 | 146.5 | 83.3% | 84.6% |
| Example 19 | $Na(FSO_3)$ | 2 | 146.2 | 82.6% | 83.7% |
| Example 20 | I-3 | 2 | 147.2 | 84.3% | 85.8% |
| Example 21 | I-4 | 2 | 147.4 | 85.0% | 86.7% |
| Example 22 | I-5 | 2 | 147.1 | 84.2% | 85.3% |
| Example 23 | I-6 | 2 | 146.8 | 83.3% | 84.6% |
| Example 24 | $Li(FSO_3)$+I-4 | 1+1 | 147.2 | 84.7% | 86.0% |
| Example 25 | I-4 | 0.01 | 146.2 | 81.4% | 83.4% |
| Example 26 | I-4 | 0.1 | 146.4 | 82.6% | 84.7% |
| Example 27 | I-4 | 0.5 | 146.7 | 83.2% | 85.0% |
| Example 28 | I-4 | 5 | 147.0 | 84.0% | 85.6% |
| Example 29 | I-4 | 10 | 146.4 | 82.9% | 84.1% |
| Example 30 | I-4 | 20 | 146.0 | 81.4% | 83.2% |

**Table 3**

| | Specific surface area B of negative electrode plate ($m^2/g$) | Gram capacity (mAg/h) | Capacity retention rate after 500 cycles at 60°C | Capacity retention rate after 60 days of storage at 60°C |
|---|---|---|---|---|
| Example 21 | 1.5 | 147.4 | 85.0% | 86.7% |
| Example 31 | 0.5 | 146.5 | 83.2% | 84.6% |
| Example 32 | 0.8 | 147 | 84.4% | 86.5% |
| Example 33 | 2.5 | 147.1 | 84.0% | 85.3% |
| Example 34 | 3.5 | 146.3 | 80.2% | 82.3% |

According to the above results, the lithium-ion batteries of Examples 1 to 34 have higher available capacity, and also, when the type and mass percentage content of the positive electrode lithium supplement and the molarity A of the lithium salt in the electrolyte solution are within the scope of the present application, the lithium-ion batteries have good high temperature cycle performance and high temperature storage performance.

As can be seen from Examples 1 to 6, when the positive electrode lithium supplement of the same type and mass percentage content $W_1$ is selected in the lithium-ion batteries, by regulating the molarity A of the lithium salt in the electrolyte solution within the scope of the present application, the lithium-ion batteries can have good high temperature cycle performance and high temperature storage performance.

In contrast, in Comparative Examples 1 to 2, when the positive electrode lithium supplement of the same type and mass percentage content $W_1$ is selected in the lithium-ion batteries, the molarity A of the lithium salt in the electrolyte solution is outside the scope of the present application, and the high temperature cycle performance and high temperature storage performance of the lithium-ion batteries have not been effectively improved.

The type of the positive electrode lithium supplement generally also affects the performance of lithium-ion batteries. From Example 3 and Examples 7 to 9, it can be seen that the lithium-ion batteries with the type of the positive electrode lithium supplement within the scope of the present application have a higher available capacity, as well as good high temperature cycle performance and high temperature storage performance.

The mass percentage content $W_1$ of the positive electrode lithium supplement generally also affects the performance of lithium-ion batteries. From Example 3 and Examples 10 to 14, it can be seen that the lithium-ion batteries with the mass percentage content $W_1$ of the positive electrode lithium supplement within the scope of the present application have a higher available capacity, as well as good high temperature cycle performance and high temperature storage performance.

The type of the lithium salt generally also affects the performance of lithium-ion batteries. From Example 3 and Examples 15 to 16, it can be seen that the lithium-ion batteries with the type of the lithium salt within the scope of the present application have a higher available capacity, good high temperature cycle performance and high temperature storage performance.

The type of the additive in the electrolyte solution generally also affects the performance of lithium-ion batteries. It can be seen from Examples 17 to 24 that the lithium-ion batteries with the type of the additive within the scope of the present application have a higher available capacity, good high temperature cycle performance and high temperature storage performance.

The mass percentage content $W_2$ of the additive in the electrolyte solution generally also affects the performance of lithium-ion batteries. From Example 21 and Examples 25 to 30, it can be seen that the lithium-ion batteries with the mass percentage content $W_2$ of the additive within the scope of the present application have a higher available capacity, good high temperature cycle performance and high temperature storage performance.

The specific surface area B of the negative electrode plate generally also affects the performance of lithium-ion batteries. From Example 21 and Examples 31 to 34, it can be seen that the lithium-ion batteries with the specific surface area B of the negative electrode plate within the scope of the present application have a higher available capacity, good high temperature cycle performance and high temperature storage performance.

It should be noted that the present application is not limited to the above embodiments. The above embodiments are exemplary only, and any embodiment that has substantially same constitutions as the technical ideas and has the

same effects within the scope of the technical solution of the present application falls within the technical scope of the present application. In addition, without departing from the gist of the present application, various modifications that can be conceived by those skilled in the art to the embodiments, and other modes constructed by combining some of the constituent elements of the embodiments also fall within the scope of the present application.

## Claims

1. An electrochemical device comprising a positive electrode plate and an electrolyte solution, the positive electrode plate comprising a positive electrode current collector and a positive electrode active material layer provided on at least one surface of the positive electrode current collector, the positive electrode active material layer containing a positive electrode lithium supplement;

   wherein the positive electrode lithium supplement comprises one or more of $Li_2M^1O_2$, $Li_2M^2O_3$, $Li_3M^3O_4$, $Li_5M^4O_4$, and $Li_6M^5O_4$, wherein $M^1$ comprises one or more of Ni, Co, Fe, Mn, Zn, Mg, Ca, and Cu, $M^2$ comprises one or more of Mn, Sn, Mo, Ru, and Ir, $M^3$ comprises one or more of V, Nb, Cr, and Mo, $M^4$ comprises one or more of Fe, Cr, V, and Mo, and $M^5$ comprises one or more of Co, V, Cr, and Mo; and
   the electrolyte solution contains a lithium salt, wherein the molarity of the lithium salt in the electrolyte solution is A, and 1.5mol/L≤A≤4mol/L, preferably, 2mol/L≤A≤3mol/L.

2. The electrochemical device according to claim 1, wherein the mass percentage content of the positive electrode lithium supplement based on the mass of the positive electrode active material layer is $W_1$, and 0.1%≤$W_1$≤10%, preferably, 1%≤$W_1$≤8%.

3. The electrochemical device according to claim 1 or 2, wherein the positive electrode lithium supplement comprises one or more of $Li_2NiO_2$, LizCuOz, $Li_2Ni_aCu_bM_{1-a-b}O_2$, $Li_2MnO_2$, $Li_3VO_4$, $Li_3NbO_4$, $Li_5FeO_4$, and $Li_6CoO_4$; preferably, the positive electrode lithium supplement comprises one or more of $Li_2NiO_2$, LizCuOz, $Li_2Ni_aCu_bM_{1-a-b}O_2$, $Li_5FeO_4$, and $Li_6CoO_4$;
   wherein M comprises one or more of Zn, Sn, Mg, Fe and Mn; 0<a<1, 0<b<1, and 0.9<a+b≤1; preferably, 0.4≤a≤0.8, and 0.2≤b≤0.6; more preferably, 0.5≤a≤0.7, and 0.3≤b≤0.5.

4. The electrochemical device according to any one of claims 1 to 3, wherein the lithium salt comprises at least one of $LiN(C_tF_{2t+1}SO_2)(C_sF_{2s+1}SO_2)$, $LiPF_6$, $LiBF_4$, LiBOB, $LiAsF_6$, Li(FSOz)zN, $LiCF_3SO_3$ and $LiClO_4$, and t≥0, and s≥0; preferably, the lithium salt comprises at least one of LiFSI and $LiPF_6$.

5. The electrochemical device according to any one of claims 1 to 4, wherein the electrolyte solution further comprises an additive comprising at least one of a fluorosulfonate salt and a cyclic sulfate ester;
   the mass percentage content of the additive based on the mass of the electrolyte solution is $W_2$, and 0.01%≤$W_2$≤20%, preferably, 0.1%≤$W_2$≤10%.

6. The electrochemical device according to claim 5, wherein the fluorosulfonate salt is $(FSO_3)_rQ^{r+}$, wherein $Q^{r+}$ comprises at least one of $Li^+$, $Na^+$, $K^+$, $Rb^+$, $Cs^+$, $Mg^{2+}$, $Ca^{2+}$, $Ba^{2+}$, $A1^{3+}$, $Fe^{2+}$, $Cu^{2+}$, $Fe^{3+}$, $Ni^{2+}$, and $Ni^{3+}$.

7. The electrochemical device according to claim 5 or 6, wherein the cyclic sulfate ester comprises a compound D represented by the general formula (I):

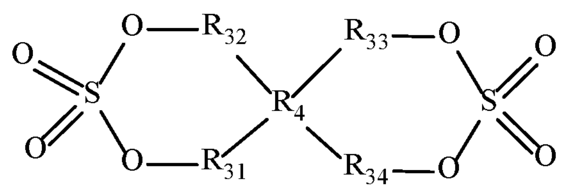

(I),

   wherein in the general formula (I), $R_{31}$ to $R_{34}$ are each independently selected from a single bond or a methylene group, $R_4$ is selected from

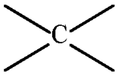, 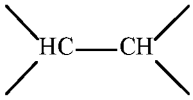, or 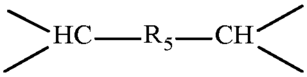,

and $R_5$ is selected from $C_1$ to $C_3$ alkylene, $C_1$ to $C_3$ haloalkylene or $C_1$ to $C_3$ alkyleneoxy, and the halogen atom in $C_1$ to $C_3$ haloalkylene comprises fluorine, chlorine, bromine, or iodine.

**8.** The electrochemical device according to any one of claims 5 to 7, wherein the cyclic sulfate ester comprises at least one of the following compounds I-1 to I-6:

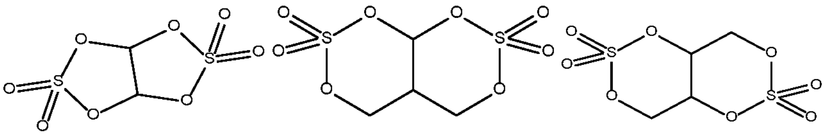

I-1 I-2 I-3

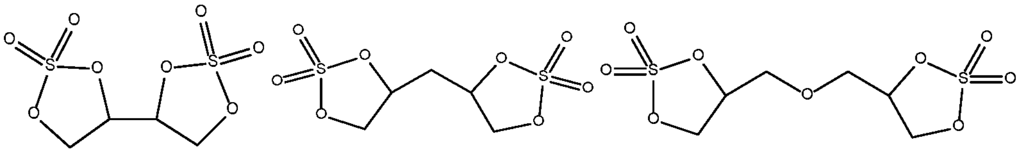

I-4 I-5 I-6

**9.** The electrochemical device according to any one of claims 1 to 8, further comprising a negative electrode plate, wherein the specific surface area of the negative electrode plate is B, and $0.5\ m^2/g \leq B \leq 3.5\ m^2/g$; preferably, $0.8\ m^2/g \leq B \leq 2.5\ m^2/g$.

**10.** A power consuming device comprising the electrochemical device according to any one of claims 1 to 9.

**INTERNATIONAL SEARCH REPORT**

International application No.
**PCT/CN2021/126107**

**A. CLASSIFICATION OF SUBJECT MATTER**

H01M 10/0525(2010.01)i；H01M 4/52(2010.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNPAT, CNKI, WPI, EPODOC, Web of Science, STN: 宁德时代新能源科技股份有限公司, 陈培培, 电池, 补锂, 正极, 锂盐, 酸 2W 锂, 氧化 2W 锂, SEI, 高温, 电解液, 浓度, 氟磺酸盐, 硫酸酯, batter+, lithium, supple+, compens+, prelithiation, positive, active, thermal+, lithium 3W oxide

**C. DOCUMENTS CONSIDERED TO BE RELEVANT**

| Category* | Citation of document, with indication, where appropriate, of the relevant passages | Relevant to claim No. |
|---|---|---|
| Y | CN 110854382 A (NINGDE AMPEREX TECHNOLOGY LTD.) 28 February 2020 (2020-02-28)<br>description, paragraphs [0027], [0054], [0063]-[0065], [0072], and [0076]-[0082] | 1-10 |
| Y | CN 112151749 A (NINGDE AMPEREX TECHNOLOGY LTD.) 29 December 2020 (2020-12-29)<br>description, paragraphs [0043], [0097], [0098], [0123]-[0142], and [0169]-[0176] | 1-10 |
| A | CN 104319115 A (HUIZHOU OMOXI TECHNOLOGY CO., LTD.) 28 January 2015 (2015-01-28)<br>entire document | 1-10 |
| A | CN 1973397 A (DEGUSSA GMBH) 30 May 2007 (2007-05-30)<br>entire document | 1-10 |
| A | CN 109950621 A (SHENZHEN CAPCHEM TECHNOLOGY CO., LTD.) 28 June 2019 (2019-06-28)<br>entire document | 1-10 |
| A | CN 113526561 A (EVE ENERGY CO., LTD.) 22 October 2021 (2021-10-22)<br>entire document | 1-10 |

☑ Further documents are listed in the continuation of Box C. ☑ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **03 July 2022** | **19 July 2022** |
| Name and mailing address of the ISA/CN<br>**China National Intellectual Property Administration (ISA/CN)**<br>**No. 6, Xitucheng Road, Jimenqiao, Haidian District, Beijing 100088, China**<br>Facsimile No. **(86-10)62019451** | Authorized officer<br><br>Telephone No. |

Form PCT/ISA/210 (second sheet) (January 2015)

**INTERNATIONAL SEARCH REPORT**

International application No.
**PCT/CN2021/126107**

**C. DOCUMENTS CONSIDERED TO BE RELEVANT**

| Category* | Citation of document, with indication, where appropriate, of the relevant passages | Relevant to claim No. |
|---|---|---|
| A | JP 2020173998 A (GS YUASA CORP.) 22 October 2020 (2020-10-22)<br>entire document | 1-10 |
| A | CN 110416597 A (NINGDE CONTEMPORARY AMPEREX TECHNOLOGY CO., LTD.) 05 November 2019 (2019-11-05)<br>entire document | 1-10 |
| A | CN 109616629 A (CENTRAL SOUTH UNIVERSITY) 12 April 2019 (2019-04-12)<br>entire document | 1-10 |

Form PCT/ISA/210 (second sheet) (January 2015)

**INTERNATIONAL SEARCH REPORT**
**Information on patent family members**

International application No.
**PCT/CN2021/126107**

| Patent document cited in search report | | | Publication date (day/month/year) | Patent family member(s) | | | Publication date (day/month/year) |
|---|---|---|---|---|---|---|---|
| CN | 110854382 | A | 28 February 2020 | WO | 2021088166 | A1 | 14 May 2021 |
| | | | | CN | 110854382 | B | 13 April 2021 |
| CN | 112151749 | A | 29 December 2020 | None | | | |
| CN | 104319115 | A | 28 January 2015 | None | | | |
| CN | 1973397 | A | 30 May 2007 | TW | 200607135 | A | 16 February 2006 |
| | | | | WO | 2005104288 | A1 | 03 November 2005 |
| | | | | DE | 102004018929 | A1 | 17 November 2005 |
| | | | | KR | 20060135958 | A | 29 December 2006 |
| | | | | EP | 1738430 | A1 | 03 January 2007 |
| | | | | US | 2007212615 | A1 | 13 September 2007 |
| | | | | JP | 2007534122 | A | 22 November 2007 |
| CN | 109950621 | A | 28 June 2019 | WO | 2019119765 | A1 | 27 June 2019 |
| | | | | EP | 3731325 | A1 | 28 October 2020 |
| | | | | US | 2020313237 | A1 | 01 October 2020 |
| | | | | CN | 109950621 | B | 03 May 2022 |
| CN | 113526561 | A | 22 October 2021 | None | | | |
| JP | 2020173998 | A | 22 October 2020 | None | | | |
| CN | 110416597 | A | 05 November 2019 | None | | | |
| CN | 109616629 | A | 12 April 2019 | None | | | |

Form PCT/ISA/210 (patent family annex) (January 2015)